# EUROPEAN PATENT APPLICATION

(11) **EP 2 405 452 A1**
(43) Date of publication of application: **11.01.2012**
(21) Application number: 10748553.4
(22) Date of filing: 08.03.2010
(51) Int. Cl.: H01G 9/058, H01M 4/13, H01M 4/131, H01M 4/36, H01M 4/48, H01M 4/485, H01M 4/583

(54) **ELECTRODE MATERIAL AND ELECTRODE CONTAINING THE ELECTRODE MATERIAL**

(30) Priority: 06.03.2009 JP 2009054257
(71) Applicant: NIPPON CHEMI-CON CORPORATION, Tokyo 141-8605 (JP)
(72) Inventor: TAMAMITSU, Kenji, Tokyo 141-8605 (JP); ISHIMOTO, Shuichi, Tokyo 141-8605 (JP); NAOI, Katsuhiko, Tokyo 183-8538 (JP); NAOI, Wako, Tokyo 186-0002 (JP); HATORI, Hiroaki, Ibaraki 305-8561 (JP); HATA, Kenji, Ibaraki 305-8561 (JP); YUMURA, Motoo, Ibaraki 305-8561 (JP)
(74) Representative: Eisenführ, Speiser & Partner
(86) International application number: PCT/JP2010/001623
(87) International publication number: WO 2010/100954

(57) **Abstract**

The electrode material includes metal oxide nanoparticles formed by applying shear force and centrifugal force to reactants containing a reaction inhibitor in a rotating reaction vessel during a chemical reaction; and carbon nanotubes with a specific area of 600 to 2600m²/g to which shear force and centrifugal force are applied for dispersion in the rotating reaction vessel during the chemical reaction.The metal oxide particles are highly dispersed and carried on the carbon nanotubes.Preferably, the metal oxide is lithium titanate.

## Description

### TECHNICAL FIELD

The present invention relates to an electrode material and an electrode containing the same.

### BACKGROUND ART

In an electrode of a lithium battery, for example, a carbon material is currently used to store and release lithium.However, the redox potential of the carbon material is lower than the reduction potential of the electrolyte solution, and thus there is a possibility of decomposition of the electrolyte solution.In view of this problem, it has been studied to use lithium titanate,which has a redox potential higher than the reduction potential of the electrolyte solution.However, the lithium titanate has a problem of low output characteristics.In view of this problem, the inventorspreviously submitted a patent application involving technology that improves the output characteristics by making lithium titanate into nanoparticles (See Japanese Patent Publication No. 2008-270795).

However, the carbon material disclosed in JP2008-270795 comprises lithium titanate nanoparticles and Ketchen black (KB),and the optimal range of the carbon content was defined as30 to 50wt%. Therefore, it was impossible to reduce the carbon content for improving the capacity characteristics.

### DISCLOSURE OF THE INVENTION

The present invention is proposed to solve the abovementioned problems of the background art.An object of the invention is to provide an electrode material which improves the capacity characteristics by reducing the carbon material, as well asan electrode comprising the electrode material.

As a result of incisive investigation to solve the above problem,the inventors discovered that by using carbon nanotubes having a specific surface area of 600 to 2600 m²/g (hereinafter, referred to as "SGCNT") as the carbon material together with the mechanochemical reaction disclosed in the description of the applicants' previous patent application,the carbon material content can be reduced and the electrode material improving the capacity characteristicscan be obtained.

### (Carbon Material)

The SGCNT is suitable to be used as the carbon material constituting the electrode material of the present invention.In the present invention, the inventors came to use SGCNT for the following reasons.The carbon nanotubes with a specific surface area no greater than 500mg²/g form bundles and micro-aggregate due to the strong van der Waals forces, and thus it is difficult to obtain high dispersibility.In contrast,the carbon nanotubes with a large specific surface area of 600 to 2600m²/g (SGCNT)hardly form bundles and micro-aggregatedue to the strong van der Waals forces.Therefore, high dispersibility can be expected therefrom.

It is preferable to use the nanotubes with a large specific surface area such as the SGCNT used in the electrode material of the present invention for the purpose of making an electrochemical capacitor with even higher capacitance and energy density.The carbon nanotubes may be single-walled, double-walled, multi-walled (comprising walls of three or more layers), or a mixture thereof.

Conventionally, the carbon nanotubes used in the electrode of an electrochemical capacitor have the specific surface area of about 500m²/g at most.In contrast, in the present invention, the carbon nanotubes with an extremely large specific surface area of no less than 600m²/g are used as the electrode material to achieve the intended object.Such a large specific surface area can be attained by using the carbon nanotubesin which the bundles are not formed between the carbon nanotubes. Alternatively, the carbon nanotubes with extremely few bundles formed may also be used.

Such carbon nanotubes without bundles or with extremely few bundles can be obtained from the known methods disclosed in, for example, Science, Vol. 306, p. 1362-1364 (2004) and Chemical Physics Letters, 403, p. 320-323 (2005). Furthermore, it is also possible to use a method involving a process to release the bundled structures of HiPco nanotubes (a product of Carbon Nanotechnologies, Inc.),which is a commercially available product with a specific surface area of several hundred m²/g. This method is disclosed in, for example, Journal of Physical Chemistry B, 108, p. 18395-18397 (2004). In the present invention, when the single-walled SGCNT is used, preferably the diameter is 2 to 4nm, the length is 0.1 to 10mm, and the purity is 80 to 99.98%.When the double-walled SGCNT is used, preferably the diameter is 4 to 10nm, the length is 0.1 to 10mm, and the purity is 80 to 99.98%.

Moreover, as the SGCNT used in the electrode material of the present invention, it is preferable to use the SGCNT having semiconductive properties in addition to having large specific surface area as described above. The reason is that in the process of making a capacitor using SGCNT in both electrodes, high capacity can be obtained when a high voltage is applied thereto.

Moreover, as the SGCNT used in the electrode material of the present invention, it is preferable to use the SGCNT having the density of 0.2 to 1.5g/cm³. If the density is much lower than this range, the material becomes mechanically brittle, and sufficient mechanical strength cannot be obtained.The specific capacity per unit volume also becomes lower.On the other hand, if the density is much higherthan this range, the voids to be filled with the electrolyte solution are eliminated, which results decrease ofthe specific capacity.

### (Metal Salt)

As to the metal salt constituting the electrode material of the present invention, a metal alkoxide is preferable. Alternatively, chloride salts, nitrates, sulfates, acetates, and the like may be used.Asthe metal alkoxide,titanium alkoxide is preferable.As other example, it is preferable to use a metal alkoxideof which reaction rate constant for hydrolysis is at least 10⁻⁵mol⁻¹·sec⁻¹.Examples of such a metal include tin, zirconium, cesium, and the like.

### (Reaction Inhibitor)

The above-described mecanochemical reaction, disclosed in JP 2008-270795, is applied to the prescribed metal alkoxide. When a prescribed compound is added to the metal alkoxide as the reaction inhibitor, the chemical reaction can be inhibited from accelerating too quickly since the prescribed compound forms a complex with the metal alkoxide.

Thus, in the present invention,per 1 mole of the metal alkoxide,1 to 3moles of a prescribed compoundforming a complex therewith,such as acetic acid,is addedso that the reaction can be inhibited and controlled.From this reaction, nanoparticles of the metal and oxide complex are formed, e.g., nanoparticles comprising a lithium and titanium oxide complex that is a precursor of lithium titanate.Further, crystals of lithium titanate can be obtained by baking the nanoparticles.

As substances other than acetic acid that can form a complex with a metal oxide,it may be used the complexing agents, typified by carboxylic acids such as citric acid, oxalic acid, formic acid, lactic acid, tartaric acid, fumaric acid, succinic acid, propionic acid, and levulinic acid; amino polycarboxylic acids such as EDTA; and amino alcohols such as triethanolamine.

### (Mechanochemical Reaction)

The reaction method used in the present invention is the same mechanochemical reaction method disclosed in JP 2008-270795, which is an application previously submitted by the present applicants and others.The mechanochemical reaction is to accelerate the reaction by applying shear force and centrifugal force to the reactants in a rotating reaction vessel during the chemical reaction.

This reaction method can accelerate the chemical reaction at an unprecedented rate.The reason is expected that since both types of mechanical energy (shear force and centrifugal force) are applied simultaneously to the reactants, this energy is converted into chemical energy.

In order to accelerate such chemical reaction, it may be used a reaction vessel comprising concentric cylinders consisting of an outer cylinder and an inner cylinder.Through-holes are provided on the side walls of the inner cylinder and a sheathingis disposedonanopening of the outer cylinder.In the vessel, the reactants in the inner cylinder is movedto the inner wall of the outer cylinder through the through-holes of the inner cylinder due to centrifugal force resulting from rotation of the inner cylinder and form a thin film comprising the reactants on the inner wall of the outer cylinder, and both shear force and centrifugal force are then applied to this thin film.Preferably the thickness of the aforementioned thin film is 5mm or less, and preferably the centrifugal force applied to the reactants of the inner cylinder of the aforementioned reaction vessel is at least 1500N (kg·m/s⁻²).

In detail, the above metal alkoxide, the reaction inhibitor and SGCNT are placed into the inner cylinder of the reaction vessel, and the inner cylinder is rotated to mix and disperse the reactants. Moreover, water is added to the inner cylinder during rotation to advance hydrolysis and a condensation reaction so that a metal oxide is formed.The metal oxide and SGCNT are mixed in a dispersed state.At the end of the reaction, the SGCNT carrying highly dispersed metal oxide nanoparticles can be obtained.

It should also be noted that in the present invention, the above dispersion, hydrolysis, and condensation reaction can also be carried out simultaneously. Moreover, in the baking step, crystalline nanoparticles with a small particle size can be formed since aggregation of the metal oxide can be prevented by rapid heating from room temperature to 900°C within 3 minutes.

### (Application to an Electrode)

The carbon carrying the highly dispersed metal oxide nanoparticles obtained in the present invention can be mixed with a binder and molded tomanufacturean electrode of an electrochemical element, i.e., an electrode for storing electrical energy.This electrode exhibits high output characteristics and high capacity characteristics.

Here, the electrochemical element that can use this electrode is an electrochemical capacitor or a battery that comprises an electrolyte solution containing lithium ions.In other words, the electrode of the present invention functions as an anode that can absorb and desorb lithium ions.In addition, an electrolyte solution containing lithium ions is used and the counter electrode is formed by using activated carbon,an oxide that absorbs and desorbs lithium, and carbon, or the like. By this way, the electrochemical element or the battery can be constituted.

As described above, the present invention can provide an electrode material that can reduce the content of carbon material and increase capacity characteristics, and an electrode comprising the electrode material.

### BRIEF DESCRIPTION OF THE DRAWINGS

FIG. 1 is a photograph substituting for a drawing that shows a TEM image of the complex of Example 1.
FIG. 2 shows the results of the discharge testing using the electrode according to the present invention.
FIG. 3 shows the results of the rate characteristic testing of the electrode according to the present invention.

### BEST MODE FOR CARRYING OUT THE INVENTION

The present invention is described more specifically through the examples below.

### (Example 1)

A mixed solvent was prepared by dissolving acetic acid and lithium acetate in a mixture of isopropanol and water such that there would be 1.8mol of acetic acid and 1mol of lithium acetate per 1mol of titanium alkoxide.This mixed solvent was placed into the rotary reaction vessel together with the titanium alkoxide, isopropyl alcohol, and SGCNT.The inner cylinder was rotated for 5minutes at a centrifugal force of 66,000N (kg·m/s⁻²). As a result, a thin film of the reactants is formed on the inner wall of the outer cylinder, and the reaction was acceleratedby applying shear force and centrifugal force to the reactants.By this way, SGCNT that carried a highly dispersed lithium titanate precursor was obtained.

Thus obtained SGCTN carrying the highly dispersed lithium titanate precursor was dried under vacuum at 80°C for 17hours so that a composite powder comprising the highly dispersed lithium titanate precursor carried on the SGCNT can be obtained.

Thus obtained composite powder of highly dispersed lithium titanate precursor carried on SGCNT was rapidly heated under vacuum from room temperature to 900°C within 3minutes to advance crystallizationof the lithium titanate precursor.Thereby, a composite powder of highly dispersed lithium titanate nanoparticles carried on the SGCNTwas obtained.In the present example, the amounts of titanium alkoxide and SGCNT placed in the rotary reaction vessel were calculated and prepared such that the weight ratio of lithium titanate to SGCNT would be approximately 80:20.

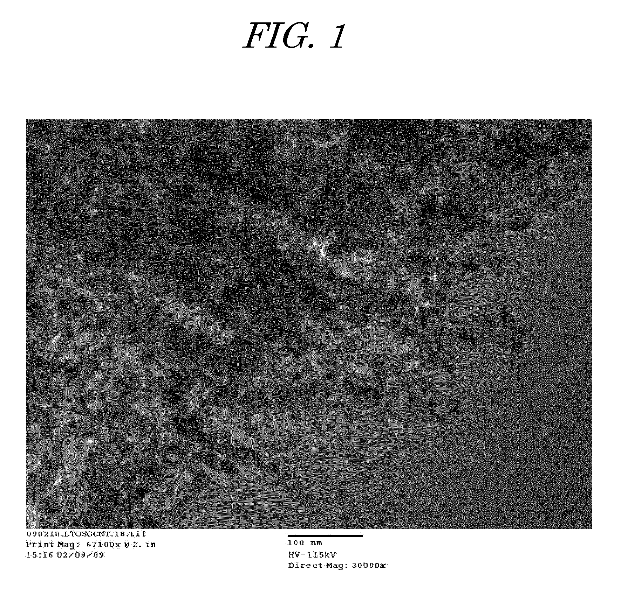

A TEM image of the composite powder obtained thereby is shown in FIG. 1. It is clear from FIG. 1 that lithium titanate nanoparticles of 5nm to 20nm are highly dispersed and carried on the SGCNT.

### (Comparative Example 1)

A mixed solvent was prepared by dissolving acetic acid and lithium acetate in a mixture of isopropanol and water such that there would be 1.8mol of acetic acid and 1mol of lithium acetate per 1mol of titanium alkoxide.This mixed solvent was placed into a rotary reaction vessel together with titanium alkoxide, isopropyl alcohol, and Ketchen black (Ketchen Black International Company, product name: Ketchen black EC600JD, void ratio: 78vol.%, primary particle size: 40nm, average secondary particle size: 337.8nm).The inner cylinder was rotated for 5minutes at a centrifugal force of 66,000N (kg·m/s⁻²).As a result, a thin film of the reactants is formed on the inner wall of the outer cylinder, and the reaction was accelerated by applying shear force and centrifugal force to the reactants. By this way,Ketchen black carrying a highly dispersed lithium titanate precursorwas obtained.

Thus obtainedKetchen black carrying the highly dispersed lithium titanate precursor was dried under vacuum at 80°C for 17hours so that a composite powder of highly dispersed lithium titanate precursor carried on Ketchen black was obtained.

Thus obtained composite powder of highly dispersed lithium titanate precursor carried on Ketchen black was rapidly heated under vacuum from room temperature to 900°C within 3minutes to advance crystallizationof the lithium titanate precursor.Thereby, a composite powder of highly dispersed lithium titanate nanoparticles carried on the Ketchen black was obtained.As similar to Example 1, in Comparative Example 1, the amounts of titanium alkoxide and Ketchen black placed in the rotary reaction vessel were calculated and prepared such that the weight ratio of lithium titanate to Ketchen black would be approximately 80:20.

### (Comparative Example 2)

A composite of lithium titanate carried on Ketchen black was prepared by increasing the weight ratio of Ketchen black to 4/3 that of Comparative Example 1 in relation to 1mol of titanium alkoxide placed in the rotary reaction vessel.The other conditions were the same as in Comparative Example 1 above. The weight ratio of lithium titanate to Ketchen black in Comparative Example 2 was approximately 60:40.

### (Test Results)

### (1) Charge-discharge behavior

A slurry was prepared by mixing 8 parts by weight of the composite powder obtained in Example 1 with 2 parts by weight of PVdF (polyvinylidene fluoride) in NMP (N-methyl pyrrolidone) solvent.The slurry was coated onto a copper foil and dried under vacuum at 100°C for 4hours to prepare an electrode.A lithium foil as a counter electrode was placed opposite to the prepared electrode with a separatortherebetween.As an electrolyte solution, 1M LiBF₄/EC:DMC (vol. 1:1) was injected to fabricate a coil type cell.Similar cells were prepared by using the composite powders obtained in Comparative Examples 1 and 2, respectively.

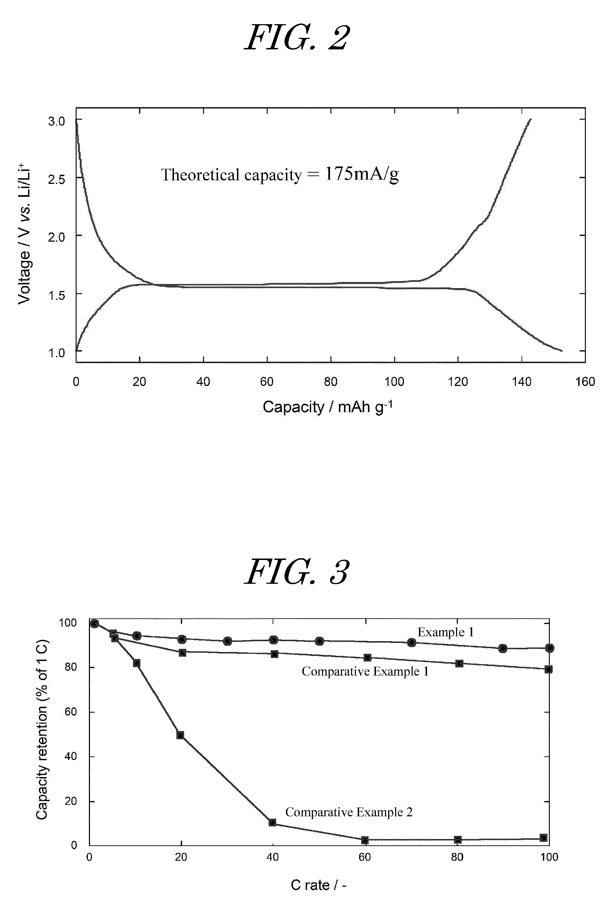

Charge-discharge measurements were carried out on the prepared cells over a voltage range of 1.0 to 3.0V at a C-rate of 1C, and the results are shown in FIG. 2. As is apparent from FIG. 2, the charge-discharge curve at 1C has a plateau at 1.55V in Example 1, and a capacity of lithium titanate is 143mAh/g. Therefore,82% of the theoretical capacity (175mA/g) was obtained.This finding indicates that the oxide highly dispersed and carried on the SGCNT is crystalline lithium titanate.In addition, the crystalline lithium titanate was verified by X-ray diffraction (XRD) analysis.

### (2) Rate retention

A slurry was prepared by mixing 8 parts by weight of each of the composite powders obtained in Example 1 and in Comparative Examples 1 and 2 with 2 parts by weight of PVdF (polyvinylidene fluoride) in NMP (N-methyl pyrrolidone) solvent.The slurry was coated onto a copper foil and dried under vacuum at 100°C for 4hours to prepare an electrode.A lithium foil as a counter electrode was placed opposite to the prepared electrode with a separatortherebetween.As an electrolyte solution, 1M LiBF₄/EC:DMC (vol. 1:1) was injected to fabricate a coil type cell.Charge-discharge measurements were carried out on the prepared cells over a voltage range of 1.0 to 3.0V at C-rates of 1 to 100C, and the results are shown in FIG. 3.FIG. 3 shows the capacity retention rate when the capacity at 1C is assigned a value of 100.

As is apparent from FIG. 3, Example 1 has a superb rate characteristics, that is, an output (capacity) at 100C is 89% of the capacity at 1C.On the other hand, in Comparative Example 1, the output (capacity) at 100C is merely a few percent of the capacity at 1C.Comparative Example 2 has satisfactory rate characteristics, that is, an output (capacity) at 100C is 80% of the capacity at 1C.However, as shown in Table 1, the lithium titanate ratio in Comparative Example 2 is low (60%), it is thus clear that the capacity per composite is lower than in Example 1.

**[Table 1]**

| | | CAPACITY PER LITHIUM TITANATE (mAh/g) | CAPACITY PER COMPLEX (mAh/g) |
|---|---|---|---|
| EXAMPLE 1 | Li₄T₁₅O₁₂/SGCNT=80:20 | 143 | 114 |
| COMPARATIVE EXAMPLE 1 | Li₄T₁₅O₁₂/KB=80:20 | 130 | 104 |
| COMPARATIVE EXAMPLE 2 | Li₄T₁₅O₁₂/KB=60:40 | 128 | 76.8 |

In general, it is known that when the carbon ratio becomes low, the lithium titanate particles are closer together physically and they agglomerate, which causes the particle size to increase and output properties to decrease.It was confirmed that when the Ketchen black content is 20% as in Comparative Example 1, agglomeration of the lithium titanate particles occurs and the particle size becomes too large, thereby deteriorating the output characteristics.In contrast, in Examples 1, it was found that even if the SGCNT content is 20%, excellent output properties can be obtained.

## Claims

1. An electrode material comprising:
metal oxide nanoparticles formed by applying shear force and centrifugal force to reactants containing a reaction inhibitor in a rotating reaction vessel during a chemical reaction; and
carbon nanotubes with a specific area of 600 to 2600m²/g which are dispersed by applying the shear force and centrifugal force in the rotating reaction vessel,wherein
the metal oxide particles are highly dispersed and carried on the carbon nanotubes.

2. The electrode material according to claim 1, wherein a thin film including the reactants containing the reaction inhibitor is formed inside the rotating reaction vessel, and a chemical reaction is accelerated or controlled by applying shear force and centrifugal force to the thin film.

3. The electrode material according to claim 2, wherein the reaction vessel is formed of concentric cylinders consisting of an outer cylinder and an inner cylinder, and through-holes are provided on side walls of the inner cylinder and a sheathing is disposed on anopeningof the outer cylinder,
wherein the reactants including the reaction inhibitor in the inner cylinder is moved to the inner wall of the outer cylinder through the through-holes of the inner cylinder due to centrifugal force resulting from the rotation of the inner cylinder, a thin film including the reactants containing the reaction inhibitor is formed on the inner wall of the outer cylinder, and a chemical reaction is accelerated or controlled by applying shear force and centrifugal force to the film.

4. The electrode material according to claim 2 or 3, wherein the thin film has a thickness of 5mm or less.

5. The electrode material according to any of claims 1 to 4, wherein the centrifugal force applied to the reactants in the inner cylinder of the reaction vessel is at least 1500N (kg·m/s²).

6. The electrode material according to any of claims 1 to 5, wherein the chemical reaction is a hydrolysis reaction and/or condensation reaction of a metal salt.

7. The electrode material according to any of claims 1 to 6, wherein the metal oxide is lithium titanate.

8. An electrode comprising the electrode material according to any of claims 1 to 7.

9. The electrode according to claim 8, wherein the metal oxide is lithium titanate.
